# EUROPEAN PATENT APPLICATION

(11) **EP 2 560 072 A1**
(43) Date of publication of application: **20.02.2013**
(21) Application number: 12180526.1
(22) Date of filing: 15.08.2012
(51) Int. Cl.: G06F 1/16

(54) **Portable electronic apparatus**

(30) Priority: 16.08.2011 US 201161524037 P
(71) Applicant: ASUSTeK Computer Inc., Taipei City 112 (TW)
(72) Inventor: Lin, Chia-Hsien, 112 Peitou, Taipei (TW); Lin, San-Feng, 112 Peitou, Taipei (TW); Chiu, Hui-Wen, 112 Peitou, Taipei (TW)
(74) Representative: 2K Patentanwälte Blasberg Kewitz & Reichel

(57) **Abstract**

A portable electronic apparatus includes a first housing (10), a second housing (20), and a fixing mechanism (30). The fixing mechanism is connected to the first housing. The second housing is fixed to the first housing by the fixing mechanism. The fixing mechanism (30) has at least one contact portion (31) which is exposed from the first housing. The fixing mechanism can switch between a locked state and an unlocked state when the contact portion is forced by an external force. When the fixing mechanism (30) is in the locked state, the second housing (20) is locked to the first housing (10) by the fixing mechanism. When the fixing mechanism is in the unlocked state, the second housing is detachable from the first housing.

## Description

### BACKGROUND OF THE INVENTION

### FIELD OF INVENTION

The disclosure relates to an electronic device and, more particularly, to a portable electronic apparatus.

### RELATED ART

As tablet display has the features of thin, low power consumption, low radiation and so on, it has been gradually replacing traditional cathode ray tube (CRT) display. And it has been applied to various electronic products, more particularly, to portable electronic apparatus, such as a tablet computer, a mobile phone, a navigation device and so on.

A tablet computer, for example, is to equip a full touch screen at present trend. Now the assembly method of the tablet computer is combining the touch screen of the tablet computer with the back cover by glue. But this kind of assembling method will cause the difficulties of maintenance and increase the problem of scrap.

### SUMMARY OF THE INVENTION

A portable electronic apparatus is disclosed. The portable electronic apparatus comprises a first housing, a second housing and a fixing mechanism connected to the first housing, the fixing mechanism is connected to the first housing, and the second housing is connected to the first housing by the fixing mechanism. The fixing mechanism comprises at least one contacting portion for switching between a locked state and an unlocked state via an external force. The second housing is locked to the first housing by the fixing mechanism when the fixing mechanism is in the locked state. The second housing is detachable from the first housing when the fixing mechanism is in the unlocked state.

Consequently, in this disclosure, the second housing is locked on the first housing by the fixing mechanism. So when the apparatus needs repairing, the second housing with the electrical elements on it can be disassembled from the first housing easily after switching the fixing mechanism to the unlocked state. In addition, the fixing mechanism has the effect of fixing the first housing and the second housing. For example, the second housing has a plurality of engaging portions, the engaging portions and the fixing mechanism are combined to achieve the fixing effect. In addition, the fixing mechanism has at least one contact portion; the contact portion is exposed from the first housing, the fixing mechanism switches between a locked state and an unlocked state via an external force, thus it improves the efficiency of assembling.

### BRIEF DESCRIPTION OF THE DRAWINGS

FIG.1 is an exploded diagram showing the first housing and the second housing of a portable electronic apparatus.

FIG.2 is a schematic diagram showing the locked state of the fixing mechanism of a portable electronic apparatus.

FIG.3 is a schematic diagram showing the unlocked state of the fixing mechanism of a portable electronic apparatus.

### DETAILED DESCRIPTION OF THE INVENTION

A portable electronic apparatus is illustrated with relating figures, and the same symbols denote the same components.

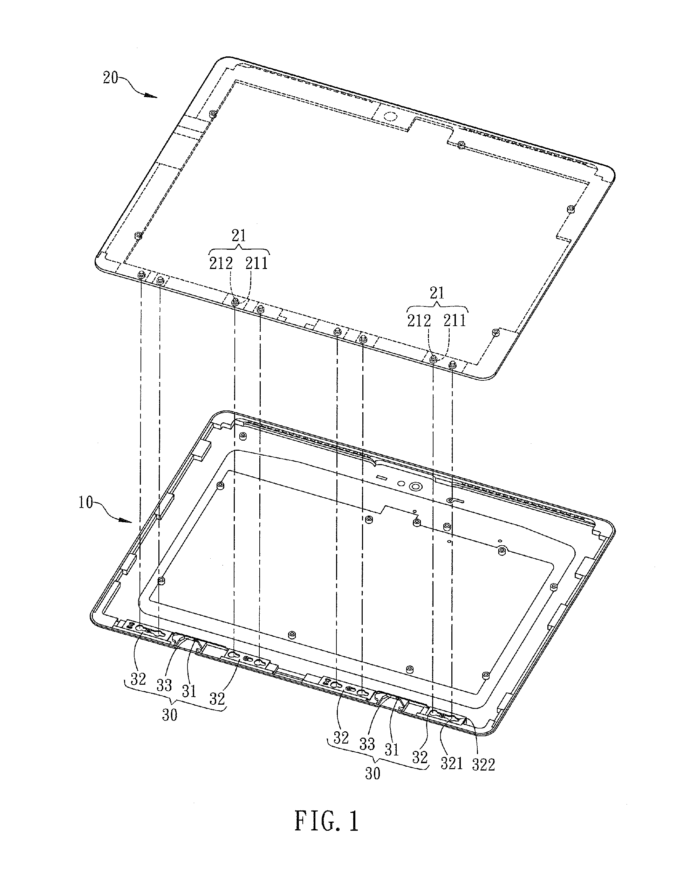

FIG 1 is an exploded diagram showing the first housing and the second housing of a portable electronic apparatus. The portable electronic apparatus can be a tablet computer, a mobile phone, a navigation device and so on, which is not limited herein. In this embodiment, the portable electronic is a tablet computer.

The portable electronic includes a first housing 10, a second housing 20 and a fixing mechanism 30. The first housing 10 forms part of an appearance of the portable electronic apparatus such as the back cover, which is not limited herein. The second housing 20 can be a housing for fixing the electronic components such as the housing for fixing and carrying a touch panel or a display panel, which is not limited herein. The fixing mechanism 30 is positioned on the first housing 10.In an embodiment, the fixing mechanism 30 is positioned on at least one side of the first housing 10. The second housing 20 can be connected to the first housing 10 by the fixing mechanism 30.

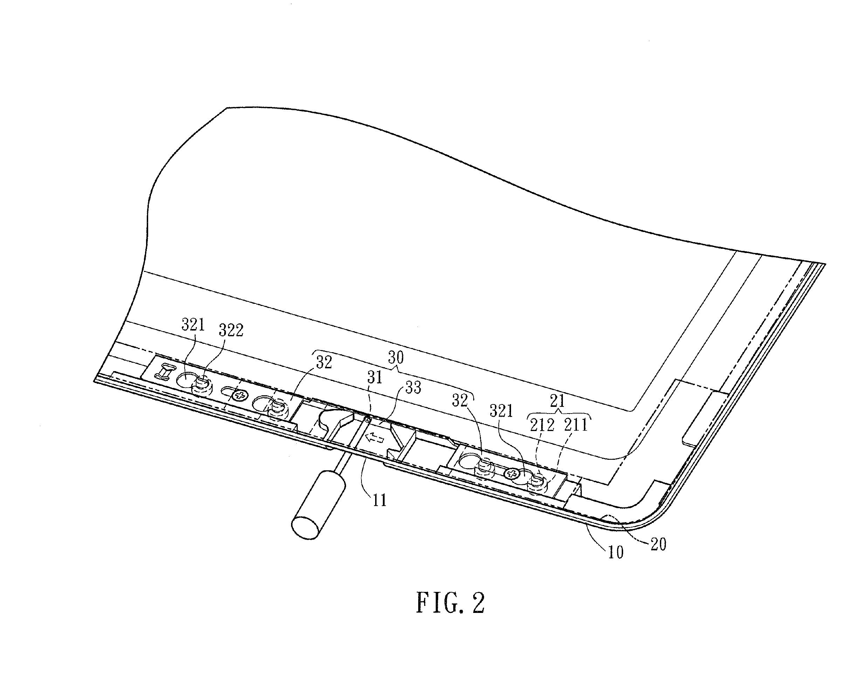

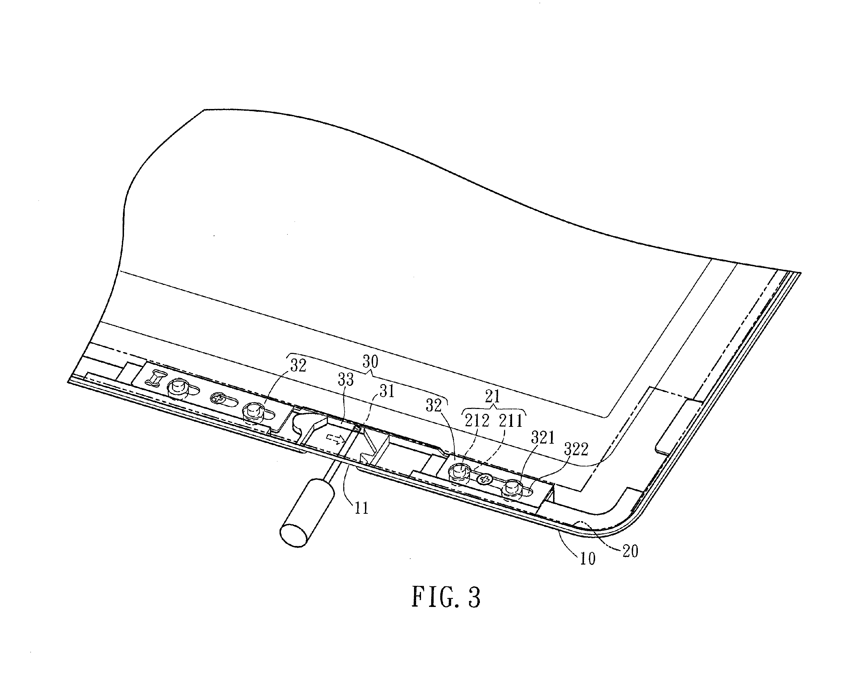

The fixing mechanism 30 has at least one contact portion 31 and the contact portion 31 can be contacted and forced by an external object. The contact portion 31 can be a cavity which is not limited herein. When the contact portion 31 is pressed and moved to the left or the right by a sharp object such as a pen point, the fixing mechanism 30 can thus be switched between a locked state and an unlocked state. As shown in FIG 2, when an external force is applied to the contact portion 31 and the contact portion 31 moves toward the first direction such as the left of the figure, the fixing mechanism 30 is in the locked state and the second housing 20 is locked to the first housing 10 by the fixing mechanism 30. As shown in FIG 3, when an external force is applied on the contact portion 31 and the contact portion 31 moves to the second direction such as the right of the figure, the fixing mechanism 30 is in an unlocked state so that the second housing 20 is detachable from the first housing 10.

Reference to FIG 1 to FIG 3, the fixing mechanism 30 will be further described below.

In this embodiment, the fixing mechanism 30 includes a plurality of fixing portions 32 and at least one connecting portion 33. The fixing portion 32 is disposed on the first housing 10 for fixing the second housing 20. For example, the fixing portion 32 is on one side of the first housing 10, which is not limited herein. The shape and the materials of the fixing portion is not limited, it can be metals or plastics. In this embodiment, the fixing portion 32 is a sheet metal. The connecting portion 33 connects each of the two adjacent fixing portions 32. In this embodiment, the connecting portion 33 is a sheet metal. The contact portion 31 is on the connecting portion 33. In other embodiment, the contact portion 31 can be on the fixing portion 32.

The fixing portion 32 comprises a plurality of apertures 321, 322 with different sizes respectively. In an embodiment, the size of aperture 321 is bigger than the aperture 322. The second housing 20 comprises a plurality of engaging portions 21. The engaging portion 21 is used for engaging the apertures 321,322 of the fixing portion 32. The engaging portion 21 comprises a top portion 211 and a neck portion 212. The width of the top portion 211 is greater than that of the neck portion 212. The width of the top portion 211 is corresponding to the size of the aperture 321 for the top portion can pass through the aperture 321. The width of the neck portion 212 is corresponding to the size of the aperture 322 for the neck portion 212 can engage with the aperture 322.

When the second housing 20 is assembled with the first housing 10, the top portion 211 and the neck portion 212 pass through the aperture 321 of the fixing portion 32. As shown in FIG 2, due to the connecting portion 33 is connected with the fixing portion 32; when an external force is applied to the contact portion 31, the fixing mechanism 30 moves and the neck portion 212 of the engaging portion 21 is engaged with the aperture 322 of the fixing portion 32, and then the fixing mechanism 30 is in the unlocked state and the second housing 20 is engaged with the first housing 10 by the fixing mechanism 30. Furthermore, the combination of the engaging portion 21 and the fixing mechanism 30 provides the fixation of the first housing 10 and the second housing 20.

As shown in FIG 3, when the contact portion 31 is forced by an external force, the fixing mechanism 30 is moved reversely, and the top portion 211 and the neck portion 212 of the engaging portion 21 are moved to the aperture 322 of the fixing portion 32, then the fixing mechanism 30 is in the unlocked state. Therefore, the engaging portion 21 can be detached from the fixing mechanism 30, and then the second housing 20 can be detached from the first housing 10.
Furthermore, as shown in FIG 2 and FIG 3, the first housing 10 comprises at least one opening 11; the contact portion is exposed from the first housing by the opening 11; an object can pass through the opening 11 to contact the portion 31. The opening 11 can be an aperture, and the portable electronic apparatus can be connected with another electronic apparatus such as a keyboard, a recharging station, a tablet computer, a mobile phone by the opening 11 which is not limited herein. The connection can be achieved by hooks or magnetism. In one embodiment, the opening 11 is a docking hole.
In summary there is disclosed a portable electronic apparatus including a first housing 10, a second housing 20, and a fixing mechanism 30. The fixing mechanism is connected to the first housing. The second housing is fixed to the first housing by the fixing mechanism. The fixing mechanism 30 has at least one contact portion 31 which is exposed from the first housing. The fixing mechanism can switch between a locked state and an unlocked state when the contact portion is forced by an external force. When the fixing mechanism 30 is in the locked state, the second housing 20 is locked to the first housing 10 by the fixing mechanism. When the fixing mechanism is in the unlocked state, the second housing is detachable from the first housing.

Although the disclosure has been described in considerable detail with reference to certain preferred embodiments thereof, the disclosure is not for limiting the scope. Persons having ordinary skill in the art may make various modifications and changes without departing from the scope. Therefore, the scope of the appended claims should not be limited to the description of the preferred embodiments described above.

## Claims

1. A portable electronic apparatus, comprising:
a first housing (10);
a second housing (20); and
a fixing mechanism (30) connected to the first housing, and the second housing connected to the first housing by the fixing mechanism, the fixing mechanism comprising at least one contact portion (31) for switching between a locked state and an unlocked state via an external force, the second housing (20) is locked to the first housing (10) by the fixing mechanism when the fixing mechanism (30) is in the locked state, the second housing is detachable from the first housing when the fixing mechanism is at the unlocked state.

2. The portable electronic apparatus according to claim 1, wherein the first housing (10) forms part of an appearance of the portable electronic apparatus.

3. The portable electronic apparatus according to claim 1 or 2, further comprises an electronic component disposed in the second housing (20).

4. The portable electronic apparatus according to one of the preceding claims, wherein the contact portion (31) is a cavity.

5. The portable electronic apparatus according to one of the preceding claims, wherein the first housing (10) comprises at least one opening, and the contact portion (31) is exposed from the first housing by the opening.

6. The portable electronic apparatus according to claim 5, wherein the portable electronic apparatus is connected to another electronic apparatus by the opening.

7. The portable electronic apparatus according to one of the preceding claims, wherein the second housing (20) includes a plurality of engaging portions (21), the engaging portions can be detachable from the fixing mechanism (30) when the fixing mechanism is in the unlocked state, and the engaging portions (21) is engaged to the fixing mechanism (30) when the fixing portion is in the locked state.

8. The portable electronic apparatus according to one of the preceding claims, wherein the external force makes the fixing mechanism (30) move and switch between the unlocked state and the locked state.

9. The portable electronic apparatus according to one of the preceding claims, wherein the fixing mechanism (30) includes a plurality of fixing portions (32) and at least one connecting portion (33), the fixing portions fix the second housing, the connecting portion connects to the fixing portion and the contact portion is in the connecting portion.

10. The portable electronic apparatus according to one the preceding claims is a tablet computer, a mobile phone or a navigation device.
